# EUROPEAN PATENT APPLICATION

(11) **EP 3 196 170 A1**
(43) Date of publication of application: **26.07.2017**
(21) Application number: 17152289.9
(22) Date of filing: 19.01.2017
(51) Int. Cl.: C02F 9/00, B01D 61/02, C02F 1/28, C02F 1/00, C02F 1/42, C02F 1/44, C02F 1/52, C02F 101/10, C02F 103/00, C02F 103/36, B01J 49/00, B01J 39/00, B01J 41/00, B01J 20/34, C02F 1/02, C02F 1/66, C02F 1/70, C02F 103/10

(54) **PROCESS FOR REDUCING SELENIUM FROM AN ION-EXCHANGE OR ADSORPTION MEDIA SPENT REGENERANT**

(30) Priority: 21.01.2016 US 201662281324 P; 17.01.2017 US 201715408341
(71) Applicant: Veolia Water Solutions & Technologies Support, 94417 Saint-Maurice Cedex (FR)
(72) Inventor: BANERJEE, Kashi, Moon Township, PA 15108 (US); BUISSON, Hervé, Apex, NC 27502 (US)
(74) Representative: Vidon Brevets & Stratégie

(57) **Abstract**

A method or process is provided for removing selenate from an ion-exchange or an adsorption media regenerant stream. The regenerant stream is processed in a nanofiltration membrane which produces a permeate and a reject stream containing the selenate. A reducing agent, such as iron, is mixed with the reject stream and this gives rise to an oxidation-reduction reaction that reduces the selenate to selenite. Thereafter, the method includes adsorbing the selenate onto an adsorbent, such as hydrous iron oxide. The adsorbent and adsorbed selenite is removed from the reject stream via a solids-liquid separation process.

## Description

### FIELD OF THE INVENTION

The present invention relates to wastewater treatment systems and processes, and more particularly to a system and process for removing selenium from a waste stream.

### SUMMARY OF THE INVENTION

The present invention, in one embodiment, relates to a method of removing selenate from an ion-exchange or an adsorption media regenerant stream. The method entails directing the regenerant stream to and through a membrane separation unit which produces a permeate and a reject stream. The reject stream includes the selenate. Next, the method includes mixing a reducing agent with the reject stream resulting in an oxidation-reduction reaction that reduces the selenate to selenite. The method further comprises adsorbing the selenite onto an adsorbent. Finally, the method entails removing the adsorbent and the adsorbed selenate from the reject stream.

In another embodiment, the method described in the above paragraph includes reducing the selenate to elemental selenium and adsorbing the elemental selenium onto the adsorbent. In still another embodiment, employing the process described in the above paragraph, the method includes mixing a catalyst with the reject stream to increase the speed of the oxidation-reduction reaction. Furthermore, in another embodiment of the present invention, the method described in the above paragraph is carried out by maintaining the pH of the reject stream at a pH of 3.5-7.5 while the selenate is reduced to selenite. In another embodiment, the method described in the above paragraph includes employing iron as the reducing agent and the method includes producing an iron oxide via the oxidation-reduction reaction that forms the adsorbent. In this embodiment, the selenite is adsorbed onto the iron oxide. In yet another embodiment, the method described in the above paragraph produces the permeate which is substantially selenate-free and wherein the iron exchange or adsorption media regenerant stream is produced in the course of regenerating a resin in the ion-exchange unit or in the course of regenerating the adsorption media in an adsorption unit and wherein the method further comprises regenerating the resin in the ion-exchange unit or regenerating the adsorption media in the adsorption unit by employing the permeate produced by the membrane separation unit.

In another embodiment, the present invention entails a method of removing selenium from a wastewater stream. The wastewater stream containing the selenium is directed into an ion-exchange unit or an adsorption media unit that removes selenium from the wastewater stream. Further, the method entails regenerating resin in the ion-exchange unit or regenerating the adsorption media in the adsorption media unit and producing a regenerant stream containing selenate. The method further includes treating the ion-exchange regenerant or the adsorption media regenerant stream having the selenate by processing the regenerant stream in a membrane separation unit to produce a permeate substantially free of selenate and a reject stream containing the selenate. Thereafter, the method entails mixing iron with the reject stream to cause an oxidation-reduction reaction which in turn reduces selenate to selenite. The method also includes forming or providing iron oxide in the rejection stream and adsorbing the selenite onto the iron oxide. The iron oxide and adsorbed selenite is removed from the reject stream in the form of a slurry. Thereafter, the seed process entails a dewatering the slurry containing the iron oxide and adsorbed selenite and this produces a non-hazardous iron oxide cake having the selenite adsorbed thereon.

Another embodiment entails the method or process described in the preceding paragraph wherein the iron that is mixed with the reject includes ferrous (Fe²⁺) ions, zero valent iron (Fe⁰), or a combination of the two, and wherein the reduction of selenate to selenite oxidizes the Fe²⁺ ions or Fe0 to ferric (Fe³⁺) ions which forms hydrous ferric oxide and wherein the method includes adsorbing the selenite onto the hydrous ferric oxide. In another embodiment, the method or process described in the preceding paragraph further entails mixing a catalyst with the reject stream and iron to increase the oxidation-reduction reaction rate, and after selenate has been reduced to selenite and the selenite adsorbed onto the iron oxide, the method further includes subjecting the reject stream to a solids-liquid separation process where water substantially free of selenium is produced. The catalyst is separated froms the reject stream, and the iron oxide having the selenite absorbed thereto is separated and is suitable for disposal as a non-hazardous material. In another embodiment, the method or process described in the preceding paragraph employs MnO₂ as a catalyst to increase the oxidation-reduction reaction rate and the method includes directing the reject stream to a solids-liquid separation process where the MnO₂ settles and is removed and recycled for further use in reducing selenate to selenite.

Other objects and advantages of the present invention will become apparent and obvious from a study of the following description and the accompanying drawings which are merely illustrative of such invention.

### BRIEF DESCRIPTION OF THE DRAWINGS

Figure 1 is a schematic illustration of a process for removing selenium from a wastewater stream employing an ion-exchange unit or an adsorption media unit.
Figure 2 is a schematic illustration of a process for removing selenate from the regenerant stream of Figure 1.

### DESCRIPTION OF EXEMPLARY EMBODIMENTS

Processes described herein are designed to remove selenium in wastewater streams, particularly to remove selenate from ion-exchange or adsorption media regenerant streams. Before discussing the processes, it may be beneficial to provide some background information relating to selenium, its various forms, why there is a need for cost effective and efficient processes for removing selenium, particularly selenate, from wastewater streams.

Sources of selenium in wastewater include oil and gas extraction, petroleum refining, coal-fired power generation, metals and mining industries, and other industrial activities. Selenium is also present in irrigation water and storm water runoff from agricultural operations located in areas with seleniferous soils. Selenium is a nutrient for biological systems. However, the safety margin between its nutrient and toxicity level is very narrow. Selenium has become a pollutant of concern around the world because of its potential effects on human health and the environment. In the USA, recently issued National Pollution Discharge Elimination System (NPDES) permits have forced industrial facilities to meet strict new discharge requirements for selenium (total selenium <5 µg/l). Several State Environmental Quality Boards have ruled that industries must achieve this selenium limitation in their surface water discharges. Globally, it is anticipated that the demand for treatment to remove selenium to the ppb level in industrial effluents will be significant within the next few years. As water quality standards become stricter, conventional treatment processes are constrained in reducing selenium to sub-ppb levels. Current state-of-the-art technologies do not offer an economically viable method to reduce selenium to the new discharge limitation.

Principal aqueous forms of selenium are selenite [Se (IV)] and selenate [Se (VI)], and their relative distributions are influenced by pH and redox condition. In an aquatic system, the anionic forms of selenious [Se (IV)] and selenic [Se (VI)] acids are found. Se (VI) is a strong acid, H₂SeO₄, which predominates under oxidizing conditions as SeO₄²⁻ above pH 1.6. The chemical behavior of selenate [Se (VI)] is similar to that of sulfate. Se (IV), a weak acid (H₂Se0₃,) exists under moderately reducing conditions. At a pH below 8.15, the mono valent biselinite ion (HSe0₃¹⁻) is the dominant form, and above pH 8.15, the divalent selenite ion (SeO₃²⁻) dominates.

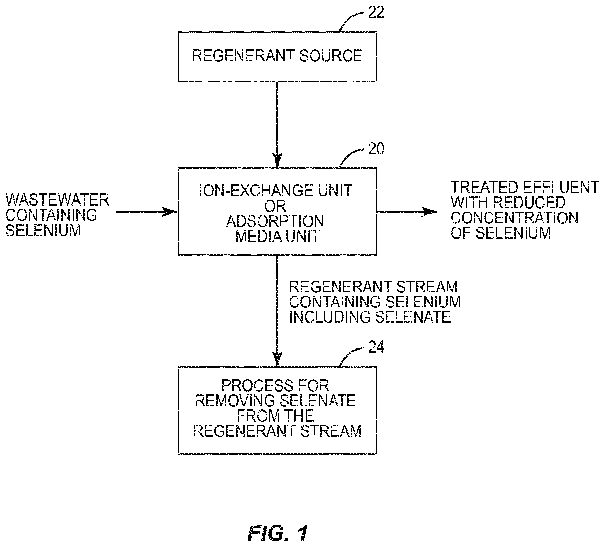

With further reference to the drawings, a wastewater stream containing selenium is directed into an ion-exchange unit or an adsorption media unit (Block 20) for removing selenium from the wastewater stream. Figure 1. Ion-exchange systems and processes, as well as adsorption media processes, are known but a brief overview of their use may be appropriate. In removing selenium in an ion-exchange unit, selenium ions are exchanged for desirable ions as the wastewater passes through granular chemicals known as ion-exchange resins. Both weak base and strong base anomic resins can be used for removing contaminants from a wastewater stream. Some resins useful in removing selenium may include mixed weak and strong base resins and these are sometimes called intermediate base anion exchange resins. Once the ion-exchange sites on the resin are completely or nearly completely full, the resin is regenerated for further use. Ion-exchange resins are normally placed in pressure vessels with the wastewater pumped through the bed of resins in a downflow or upflow direction. In regeneration, a sodium hydroxide solution can be used to regenerate both weak and strong base anion exchange resins.

With respect to adsorption media, the media can be engineered metal hydroxides or oxyhydroxides with high porosity and surface areas. Particle size of adsorption media can typically range between less than 10 nanometer (nm)and 200 micrometer (micron). In the process contemplated herein, a contaminated wastewater stream is directed through a selected adsorption media either in a downflow mode or an upflow mode and selenate in the water is adsorbed onto the media through surface complexation mechanisms. Like an ion-exchange process, when the media becomes saturated with selenate ions, it is regenerated with an alkali or salt. Like a regenerant employed in an ion-exchange application, the regenerant may have a concentration of selenate that is so high that it is not possible to dispose of through conventional means. Consequently, in the case of both an ion-exchange regenerant and an adsorption media regenerant, it is necessary to reduce the selenate concentration in these regenerant streams.

Referring back to Figure 1, at appropriate times, a regenerant from regererant source (Block 22) is directed into and through the ion-exchange unit or the adsorption media unit 20. As pointed out above, selenate ions associated with the ion-exchange unit or adsorption media unit will be exchanged for ions in the regenerant source, meaning that the concentration of selenate in the regenerant stream leaving the ion-exchange unit or adsorption media unit increases and often increases to the level that the regenerant stream must be treated in order to reduce the concentration of selenium. As discussed below, selenium is removed from the regenerant stream by converting selenate to selenite or elemental selenium and then adsorbing the selenite and elemental selenium onto an adsorbent and thereafter removing the adsorbent and selenium (Block 24).

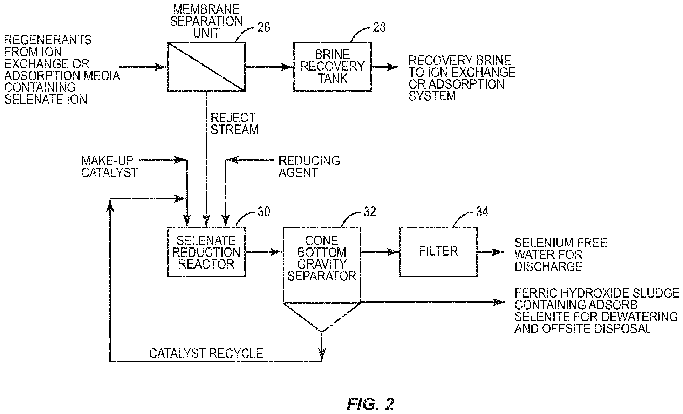

Figure 2 shows a process for treating a regenerant stream containing selenate. The regenerant is directed into a membrane separation unit 26. In the case of this exemplary process, the membrane separation unit 26 comprises a nanofiltration membrane. Nanofiltration membrane 26 produces a permeate and a reject stream. The permeate is in the form of a brine and is directed to a brine recovery tank. The nanofiltration membrane 26 typically removes 99% of the selenate in the influent to the nanofiltration membrane. In some cases, the permeate or brine in the recovery tank can be recycled and utilized, in part at least, as the regenerant source 22 for regenerating the ion-exchange unit or adsorption media unit 20.

The nanofiltration membrane 26 will reject selenium ions, including selenate. The reject stream produced by the nanofiltration membrane 26 will contain selenate ions. This reject stream is directed to a selenate reduction reactor 30. There a reducing agent is mixed with the reject stream for the purpose of reducing selenate to selenite. In one embodiment, the residence time may be approximately 30 to 60 minutes. Various reducing reagents might be used. In one embodiment, iron is used as a reducing agent to reduce selenate to selenite. In particular, ferrous (Fe²⁺) ion is mixed with the reject stream in the selenate reduction reactor 30. It may be advantageous to control the pH of the reject stream in the selenate reduction reactor 30. It is contemplated that the reduction reaction is most efficient when the reject stream is maintained at a pH of 3.5-7.5. Also, in one embodiment, a catalyst is injected into the selenate reduction reactor 30 and mixed with the reducing agent and the reject stream. By adding a catalyst, such as manganese dioxide (MnO₂), the redox kinetics can be made faster. The reaction rate can be made even faster by increasing the temperature of the reject in the presence of the catalyst. In one embodiment, the temperature is increased to greater than 40°C. In any event, the oxidation-reduction reaction brought about by the reducing agent in the presence of the catalyst will reduce selenate to selenite in the selenate reduction reactor 30.

In the selenate reduction reactor, iron (Fe²⁺ or Fe⁰) will be oxidized to ferric (Fe³⁺) which will eventually form hydrous ferrous oxide or iron oxide. The hydrous ferric oxide will form an adsorbent in the selenate reduction reactor 30. This will result in selenite, as well as Se⁰, being removed by adsorption onto the iron oxide.

The contents of the selenate reduction reactor 30 are directed to a solids-liquid separator 32. Various types of solids-liquid separators can be used here, but in the embodiment illustrated, the solids-liquid separator is a gravity settler with a cone-shaped bottom. Typically, the catalyst will have a greater specific gravity than the adsorbent or, in this embodiment, the iron oxide. For example, manganese dioxide has a specific gravity of about 5.03 while hydrous iron oxide has a specific gravity of about 4.3. In such a case, the catalyst will settle at the bottom of the cone-shaped clarifier 32. This enables the catalyst to be recycled back to the selenate reduction reactor 30. The ferric hydroxide sludge can be removed from the clarifier at a point above where the catalyst is discharged from the clarifier. See Figure 2. This ferric hydroxide sludge containing adsorbed selenite, as well as elemental selenium, can be subjected to a de-watering process. De-watering the ferric hydroxide sludge produces a non-hazardous hydrous iron oxide cake that can be hauled off-site for disposal.

The solids-liquid separator 32 produces a clarified effluent that is directed to a filter 34. Filter 34 can be a multimedia filter or a cartridge filter for removing suspended solids from the clarified effluent. In any event, the effluent produced by the filter 34 will constitute selenium-free water (selenium concentration less than 5 ppb) that can be discharged.

The above process is a practical and cost effective way of removing selenium from a wastewater stream. Once various forms of selenium are captured on ion-exchange resin or on media of the adsorption media unit, the selenium can be transferred to a regenerant stream. Thereafter, the regenerant stream is processed by a nanofiltration membrane which produces a reject stream containing the selenium including selenate. Thereafter, selenate is reduced to selenite and adsorbed on an adsorbent which can then be removed from the reject stream through a solids-liquid separation process, after which the adsorbent with the adsorbed selenite and elemental selenium is subjected to a de-watering process that results in a de-watered adsorbent having selenite and elemental selenium adsorbed thereon which can be appropriately disposed of.

The present invention may, of course, be carried out in other specific ways than those herein set forth without departing from the scope and the essential characteristics of the invention. The present embodiments are therefore to be construed in all aspects as illustrative and not restrictive and all changes coming within the meaning and equivalency range of the appended claims are intended to be embraced therein.

## Claims

1. A method of removing selenium from a wastewater stream comprising:
a. directing the wastewater stream to an ion-exchange unit containing a resin or an adsorption media unit containing media that adsorbs selenium and removing the selenium including selenate (SeO₄²⁻) from the wastewater stream;
b. regenerating the resin in the ion-exchange unit or regenerating the adsorption media in the adsorption media unit by directing a regenerant stream through the ion exchange unit or adsorption media unit and in the process producing a regenerant stream containing selenate;
c. treating the regenerant stream having the selenate by:
i. processing the regenerant stream in a nanofiltration membrane to produce a permeate substantially free of selenate and a reject stream containing the selenate;
ii. mixing iron with the reject stream in a selenate oxidation-reduction reactor, causing an oxidation-reduction reaction to occur that reduces selenate to selenite (Se0₃²⁻);
iii. forming iron oxide in the reject stream and adsorbing the selenite onto the iron oxide;
iv. removing the iron oxide and adsorbed selenite in the form of a slurry from the reject stream; and
v. de-watering the slurry containing the iron oxide and adsorbed selenite and producing a non-hazardous iron oxide cake having the selenite adsorbed thereto.

2. The method of claim 1 wherein the iron that is mixed with the reject stream includes ferrous (Fe²⁺) ions, zero valent iron (Fe⁰), or a combination of the two, and wherein the reduction of selenate to selenite oxidizes the Fe²⁺ ions or Fe⁰ to ferric (Fe³⁺) ions which forms the iron oxide which adsorbs the selenite.

3. The method of claim 1 including mixing a catalyst with the reject stream and iron to increase the oxidation-reduction reaction rate; and after selenate has been reduced to selenite and the selenite adsorbed onto the iron oxide, the method includes subjecting the reject stream to a solids-liquid separation process where water substantially free of selenium is produced, the catalyst is separated from the reject stream, and the iron oxide having the selenite adsorbed thereto is separated and suitable for disposal as a non-hazardous material.

4. The method of claim 3 wherein the catalyst comprises Mn0₂ and wherein subjecting the reject stream to a solids-liquid separation process includes directing the reject stream to a gravity separator where the Mn0₂ settles to the bottom of a gravity separator and is removed and recycled and mixed with the reject stream in the selenate oxidation-reduction reactor, and wherein water substantially free of selenium is removed from a top portion of the gravity separator; and wherein the iron oxide having the selenite adsorbed thereon is drawn from the gravity separator at a point above where the catalyst is drawn from the gravity separator.

5. The method of claim 1 wherein the oxidation-reduction of selenate also produces elemental selenium that is adsorbed to the iron oxide.

6. The method of claim 1 including mixing a catalyst with the reject stream and iron at a temperature greater than 40°C to increase the oxidation-reduction reaction rate.

7. The method of claim 1 further including:
wherein the permeate constitutes a regenerant source and the method includes regenerating the resin or adsorption media by directing the permeate through the ion exchange unit or the adsorption media unit;
wherein the iron that is mixed with the reject stream includes ferrous (Fe²⁺) ions, zero valent iron (Fe⁰), or a combination of the two, and wherein the reduction of selenate to selenite oxidizes the Fe²⁺ ions or Fe⁰ to ferric (Fe³⁺) ions which forms the iron oxide which adsorbs the selenite;
mixing a catalyst with the reject stream and iron in the selenate oxidation-reduction reactor at a temperature greater than 40°C to increase the oxidation-reduction reaction rate;
after the catalyst has been mixed with the reject stream in the selenate oxidation-reduction reactor, subjecting the reject stream to a solids-liquid separation process where water substantially free of selenium is produced, the catalyst is separated from the reject stream, and the iron oxide having the selenite adsorbed thereto is separated and suitable for disposal as a non-hazardous material; and
wherein the catalyst comprises MnO₂ and wherein the catalyst is removed from the reject stream in the solids-liquid separation process and is recycled to the selenate oxidation-reduction reactor.
